# EUROPEAN PATENT SPECIFICATION

(11) **EP 4 450 312 B1**
(45) Date of publication and mention of the grant of the patent: **11.02.2026**
(21) Application number: 23198695.1
(22) Date of filing: 21.09.2023
(51) Int. Cl.: B60K 15/01, F17C 13/04

(54) **VALVE ASSEMBLY FOR CONTROLLING CHARGING AND DISCHARGING OF FUEL**
VENTILANORDNUNG ZUR STEUERUNG DER LADUNG UND ENTLADUNG VON KRAFTSTOFF
ENSEMBLE SOUPAPE POUR COMMANDER LA CHARGE ET LA DÉCHARGE DE CARBURANT

(30) Priority: 20.04.2023 KR 20230052018
(43) Date of publication of application: 23.10.2024
(73) Proprietor: Unick Corporation, Gimhae-si, Gyeongsangnam-do 50870 (KR)
(72) Inventor: ROH, Eui-Dong, 50870 Gyeongsangnam-do (KR); KIM, Jung-Tae, 50870 Gyeongsangnam-do (KR); LEE, Ji-Yong, 50870 Gyeongsangnam-do (KR); LEE, Seung-Beom, 50870 Gyeongsangnam-do (KR); JEONG, Kwang-Yeol, 50870 Gyeongsangnam-do (KR); KIM, Ha-Na, 50870 Gyeongsangnam-do (KR); LEE, Jea-Hyuck, 50870 Gyeongsangnam-do (KR); LEE, Sang-Ho, 50870 Gyeongsangnam-do (KR)
(74) Representative: AWA Sweden AB

(56) References cited:
- KR-A- 20180 066 305
- KR-B1- 102 501 587
- US-B1- 6 502 660

## Description

### BACKGROUND

### Field

The present invention relates to a valve assembly for controlling charging and discharging of a fuel, and more specifically, to a valve assembly that controls flow of a fuel being charged to a tank or discharged to a stack in a fuel cell vehicle.

### Description of Related Art

In general, a fuel cell electric vehicle (FCEV) is a vehicle that uses electrical energy generated by reacting hydrogen as a fuel, and oxygen as an oxidant, as a power source.

A fuel cell vehicle is equipped with a valve assembly for controlling charging and discharging of a fuel to control the flow of the fuel charged to the storage tank or discharged (supplied) to the stack.

This valve assembly for controlling charging and discharging of a fuel should be able to precisely control the flow of the fuel, maintain a pressure of the fuel charged in the storage tank at a constant level, and prevent explosion of the storage tank in event of vehicle overturn or fire generation.

As disclosed in Korean Patent No. 10-2139594 (July 29, 2020), a conventional valve assembly for controlling charging and discharging of the fuel includes a flow passage for charging and discharging the fuel, a metering valve to control a flow rate of each of a charged fuel and a discharged fuel, a solenoid valve that controls the flow of each of the charged fuel and the discharged fuel, and regulates a pressure thereof, and prevents backflow thereof, a manual valve that manually controls the flow of each of the charged fuel and the discharged fuel, and a discharge valve that lowers the pressure by discharging the fuel of a transfer flow passage.

However, the conventional valve assembly for controlling charging and discharging of the fuel has a single flow passage for charging and discharging of the fuel, so that there is a problem that a high charging pressure is applied directly to the solenoid valve when charging the fuel.

When the high charging pressure is applied directly to the solenoid valve, there is a risk that the solenoid valve may be damaged and cause malfunction thereof. In particular, when the high charging pressure is applied repeatedly thereto over a long period of time, a lifespan of the solenoid valve may be shortened.

A prior art literature to the present invention is a patent literature: Korean Patent No. 10-2139594 (2020.07.29). KR20180066305A discloses a valve for a hydrogen storage tank according to the preamble of claim 1.

### SUMMARY

The present invention is intended to solve the problems of the prior art as described above. Thus, a purpose of the present invention is to provide a valve assembly for controlling charging and discharging of a fuel in which a fuel charging line and a fuel discharging line are individually disposed to prevent the high charging pressure from being applied to the solenoid valve during fuel charging.

Purposes according to the present invention are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims or combinations thereof.

To achieve the above purpose, a valve assembly with the features of claim 1 is provided. The valve assembly for controlling charging and discharging of the fuel according to the present invention includes a transfer flow passage through which the fuel to be charged and discharged is transferred.

The transfer flow passage is composed of: a charging/discharging flow passage through which the fuel is transferred during charging/discharging of the fuel; a charging flow passage branched from the charging/discharging flow passage and connected to a storage tank, wherein the fuel is transferred through the charging flow passage during charging of the fuel; and a discharging flow passage branched from the charging/discharging flow passage and connected to the storage tank, wherein the fuel is transferred through the discharging flow passage during discharging of the fuel,

Furthermore, the valve assembly for controlling charging and discharging of a fuel according to the present disclosure further includes a first check valve configured to prevent backflow of the fuel transferred along the charging flow passage; a solenoid valve configured to open or close the discharging flow passage to regulate flow of the fuel; a second check valve configured to prevent backflow of the fuel transferred along the discharging flow passage; and a metering valve configured to control a flow rate of the fuel transferred along the discharging flow passage.

According to the valve assembly for controlling charging and discharging of a fuel according to the present disclosure, the charging flow passage through which the charged fuel is transferred and the discharging flow passage through which the discharged fuel is transferred are separately disposed, and the solenoid valve is installed in the discharging flow passage, thereby solving the problem that the high charging pressure is directly applied to the solenoid valve in charging the fuel.

Therefore, the solenoid valve may be prevented from being damaged or broken by the high charging pressure, and, thus, the malfunction caused by the damage to the solenoid valve may be prevented, thereby allowing more precise control of the flow of the fuel during charging and discharging of the fuel.

Effects of the present disclosure are not limited to the effects mentioned above, and other effects not mentioned will be clearly understood by those skilled in the art from the descriptions below.

The purpose, the solution, and the effect as described above do not specify the essential features of the claims. Thus, the scope of the claims is not limited by this "Summary" section.

### BRIEF DESCRIPTION OF DRAWINGS

FIG. 1 is a schematic diagram of a valve assembly for controlling charging and discharging of a fuel according to an embodiment of the present disclosure.
FIG. 2 is a diagram showing a fuel charging process of a valve assembly for controlling charging and discharging of a fuel according to an embodiment of the present disclosure.
FIG. 3 is a diagram showing a fuel discharging process of a valve assembly for controlling charging and discharging of a fuel according to an embodiment of the present disclosure.
FIG. 4 is a diagram showing a fuel collection process of a valve assembly for controlling charging and discharging of a fuel according to an embodiment of the present disclosure.

### DETAILED DESCRIPTIONS

Advantages and features of the present disclosure, and a method of achieving the advantages and features will become apparent with reference to embodiments described later in detail together with the accompanying drawings. However, the present disclosure is not limited to the embodiments as disclosed under, but may be implemented in various different forms. Thus, these embodiments are set forth only to make the present disclosure complete, and to completely inform the scope of the present disclosure to those of ordinary skill in the technical field to which the present disclosure belongs, and the present invention is only defined by the scope of the claims.

For simplicity and clarity of illustration, elements in the drawings are not necessarily drawn to scale. The same reference numbers in different drawings represent the same or similar elements, and as such perform similar functionality. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure. Examples of various embodiments are illustrated and described further below. It will be understood that the description herein is not intended to limit the claims to the specific embodiments described. On the contrary, it is intended to cover alternatives, modifications, and equivalents as may be included in the scope of the present disclosure as defined by the appended claims.

A shape, a size, a ratio, an angle, a number, etc. disclosed in the drawings for describing embodiments of the present disclosure are illustrative, and the present disclosure is not limited thereto. The same reference numerals refer to the same elements herein. Further, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The terminology used herein is directed to the purpose of describing particular embodiments only and is not intended to be limiting of the present disclosure. As used herein, the singular constitutes "a" and "an" are intended to include the plural constitutes as well, unless the context clearly indicates otherwise. It will be further understood that the terms "comprise", "comprising", "include", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of associated listed items. Expression such as "at least one of" when preceding a list of elements may modify the entire list of elements and may not modify the individual elements of the list. In interpretation of numerical values, an error or tolerance therein may occur even when there is no explicit description thereof.

In addition, it will also be understood that when a first element or layer is referred to as being present "on" a second element or layer, the first element may be disposed directly on the second element or may be disposed indirectly on the second element with a third element or layer being disposed between the first and second elements or layers. It will be understood that when an element or layer is referred to as being "connected to", or "connected to" another element or layer, it may be directly on, connected to, or connected to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

Further, as used herein, when a layer, film, region, plate, or the like is disposed "on" or "on a top" of another layer, film, region, plate, or the like, the former may directly contact the latter or still another layer, film, region, plate, or the like may be disposed between the former and the latter. As used herein, when a layer, film, region, plate, or the like is directly disposed "on" or "on a top" of another layer, film, region, plate, or the like, the former directly contacts the latter and still another layer, film, region, plate, or the like is not disposed between the former and the latter. Further, as used herein, when a layer, film, region, plate, or the like is disposed "below" or "under" another layer, film, region, plate, or the like, the former may directly contact the latter or still another layer, film, region, plate, or the like may be disposed between the former and the latter. As used herein, when a layer, film, region, plate, or the like is directly disposed "below" or "under" another layer, film, region, plate, or the like, the former directly contacts the latter and still another layer, film, region, plate, or the like is not disposed between the former and the latter.

In descriptions of temporal relationships, for example, temporal precedent relationships between two events such as "after", "subsequent to", "before", etc., another event may occur therebetween unless "directly after", "directly subsequent" or "directly before" is not indicated.

When a certain embodiment may be implemented differently, a function or an operation specified in a specific block may occur in a different order from an order specified in a flowchart. For example, two blocks in succession may be actually performed substantially concurrently, or the two blocks may be performed in a reverse order depending on a function or operation involved.

It will be understood that, although the terms "first", "second", "third", and so on may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described under could be termed a second element, component, region, layer or section, without departing from the spirit and scope of the present disclosure.

The features of the various embodiments of the present disclosure may be partially or entirely combined with each other, and may be technically associated with each other or operate with each other. The embodiments may be implemented independently of each other and may be implemented together in an association relationship.

In interpreting a numerical value, the value is interpreted as including an error range unless there is no separate explicit description thereof.

It will be understood that when an element or layer is referred to as being "connected to", or "connected to" another element or layer, it may be directly on, connected to, or connected to the other element or layer, or one or more intervening elements or layers may be present. In addition, it will also be understood that when an element or layer is referred to as being "between" two elements or layers, it may be the only element or layer between the two elements or layers, or one or more intervening elements or layers may also be present.

The features of the various embodiments of the present disclosure may be partially or entirely combined with each other, and may be technically associated with each other or operate with each other. The embodiments may be implemented independently of each other and may be implemented together in an association relationship.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "embodiments," "examples," "aspects, and the like should not be construed such that any aspect or design as described is superior to or advantageous over other aspects or designs.

Further, the term 'or' means 'inclusive or' rather than 'exclusive or'. That is, unless otherwise stated or clear from the context, the expression that 'x uses a or b' means any one of natural inclusive permutations.

The terms used in the description below have been selected as being general and universal in the related technical field. However, there may be other terms than the terms depending on the development and/or change of technology, convention, preference of technicians, etc. Therefore, the terms used in the description below should not be understood as limiting technical ideas, but should be understood as examples of the terms for describing embodiments.

Further, in a specific case, a term may be arbitrarily selected by the applicant, and in this case, the detailed meaning thereof will be described in a corresponding description section. Therefore, the terms used in the description below should be understood based on not simply the name of the terms, but the meaning of the terms and the contents throughout the Detailed Descriptions.

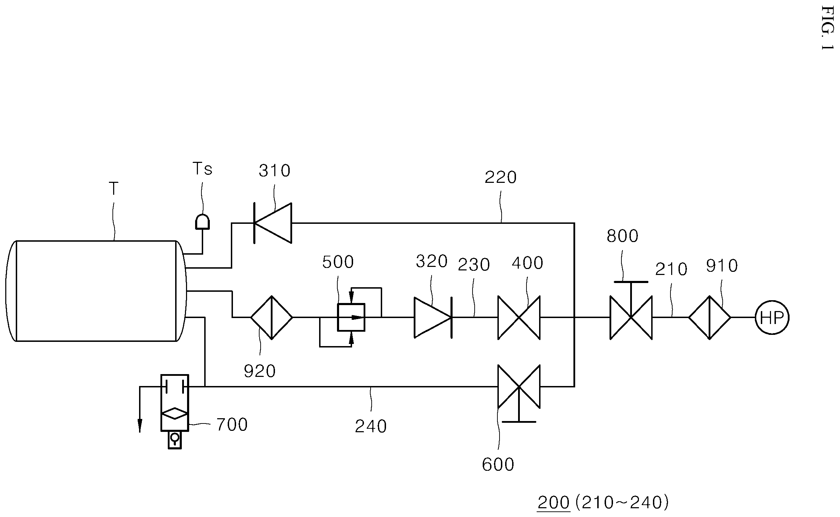

As shown in FIG. 1, the valve assembly for controlling charging and discharging of a fuel according to an embodiment of the present disclosure includes a transfer flow passage 200 connected to a port HP for charging and discharging the fuel.

In this regard, the port HP is not only connected to an adapter (not shown) provided in the vehicle for fuel injection, but is also connected to a stack (not shown) that produces electrical energy using the fuel.

The transfer flow passage 200 is a flow passage through which the fuel to be charged and discharged is transferred, and is composed of a charging/discharging flow passage 210, a charging flow passage 220, a discharging flow passage 230, and a bypass flow passage 240.

The charging/discharging flow passage 210 is a flow passage through which both am externally injected fuel (hereinafter, referred to as 'a charged fuel') and a fuel to be supplied to a fuel consumption element such as the stack (not shown) (hereinafter referred to as 'a discharged fuel') are transferred. One end of the charging/discharging flow passage 210 is connected to the port HP, and the other end thereof is connected to each of the charging flow passage 220, the discharging flow passage 230, and the bypass flow passage 240.

The charging flow passage 220 is a flow passage for transferring the fuel injected through the port HP to a storage tank T. The charging flow passage 220 branches off from the charging/discharging flow passage 210 and is connected to the storage tank T. In this regard, the charged fuel transferred along the charging flow passage 220 is charged to the storage tank T.

The discharging flow passage 230 is a flow passage for transferring the fuel charged in the storage tank T to the port HP. The discharging flow passage 230 branches off from the charging/discharging flow passage 210 and is connected to the storage tank T. In this regard, the discharged fuel transferred along the discharging flow passage 230 is supplied to a fuel consumption element such as the stack (not shown) through the port HP.

The bypass flow passage 240 is a flow passage for collecting the fuel from the storage tank T and the transfer flow passage 200 when an abnormality occurs in the valve assembly for controlling charging and discharging of a fuel and the system including the same. The bypass flow passage 240 branches off from the charging/discharging flow passage 210 and is connected to the storage tank T. In this regard, the collected fuel transferred along the bypass flow passage 230 is collected through the port HP or is discharged to the outside.

A first check valve 310 is installed in the charging flow passage 220 among the above-described flow passages 210 to 240.

The first check valve 310 is a valve to prevent backflow of the fuel transferred along the charging flow passage 220. That is, the first check valve 310 prevents the discharged fuel supplied from the storage tank T to the stack (not shown) from being transferred through the charging flow passage 220.

A second check valve 320, a solenoid valve 400, a metering valve 500, and a filter 920 are installed in the discharging flow passage 230.

The second check valve 320 is a valve to prevent backflow of the fuel transferred along the discharging flow passage 230 and prevents the charged fuel to be transferred to the storage tank T through the port HP from being transferred through the discharging flow passage 230.

The solenoid valve 400 is a valve that controls the flow of the fuel transferred along the discharging flow passage 230 and also controls the pressure of the fuel.

The solenoid valve 400 operates according to a signal applied from the vehicle and opens or closes the discharging flow passage 230 or adjusts an opening amount thereof. In other words, the solenoid valve 400 opens or closes the discharging flow passage 230 or adjusts the opening amount thereof in discharging the fuel such that the fuel is transferred at a constant pressure.

The metering valve 500 is a valve that controls a flow rate of the fuel transferred along the discharging flow passage 230. This metering valve 500 is installed between the solenoid valve 400 and the storage tank T to control the flow rate of the discharged fuel. In this regard, the metering valve 500 controls the flow rate using a pressure difference between a pressure of the charged fuel stored in the storage tank T and a pressure of the discharged fuel transferred along the discharging flow passage 230.

The filter 920 is configured to remove foreign substances such as moisture contained in the fuel transferred along the discharging flow passage 230, that is, the discharged fuel transferred from the storage tank T to the port HP.

A discharge valve 600 and a temperature-sensitive safety device 700 are installed in the bypass flow passage 240.

The discharge valve 600 is configured to collect the fuel from the storage tank T and the transfer flow passage 200 and operates when an abnormality occurs in the valve assembly for controlling charging and discharging of a fuel and the system including the same to collect the fuel from the storage tank T and the transfer flow passage 200. In this regard, the collected fuel transferred along the bypass flow passage 230 is collected through the port HP or discharged to the outside.

The temperature-sensitive safety device 700 is configured to operate according to a surrounding temperature around the valve assembly for controlling charging and discharging of the fuel to discharge the fuel charged in the storage tank T to the outside.

A manual valve 800 and a filter 910 are installed in the charging/discharging flow passage 210 in the present embodiment.

The manual valve 800 is a valve that manually controls the flow of the fuel during charging/discharging. The manual valve 800 may forcibly block the flow of the fuel through the charging flow passage 220, the discharging flow passage 230, and the bypass flow passage 240 and may forcibly disable functions of all components installed in the discharging flow passage 230, the discharging flow passage 230, and the bypass flow passage 240.

The filter 910 is a filter for removing the foreign substances such as moisture contained in fuel transferred along the charging/discharging flow passage 210. That is, the filter 910 removes the foreign substances contained in the charged fuel transferred from the port HP to the storage tank T and, at the same time, removes foreign substances contained in the discharged fuel transferred from the storage tank T to the port HP.

In one example, a temperature sensor TS is installed in the storage tank T. The temperature sensor TS monitors temperature rise as the pressure of the storage tank T increases in charging the fuel thereto, and thus plays a role in preventing the pressure rise.

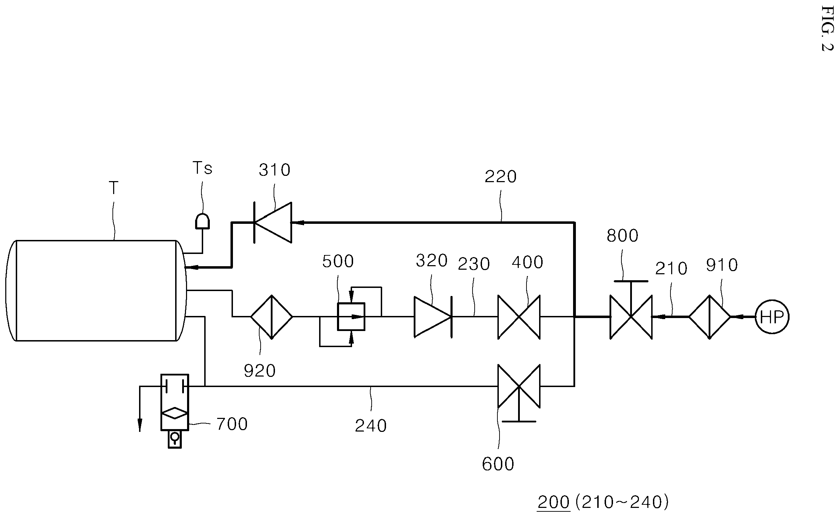

Referring to FIGS. 2 to 4, the charging, discharging and collecting processes of the valve assembly for controlling charging and discharging of the fuel according to this embodiment will be described below.

### [In charging fuel]

The fuel injected from an external source such as a charging station is charged to the storage tank T through the port HP and the valve assembly for controlling charging and discharging of a fuel.

As shown in FIG. 2, the fuel transferred along the charging/discharging flow passage 210 passes through the filter 910 to remove the foreign substances such as moisture therefrom, and is then branched to the charging flow passage 220 and transferred and charged to the storage tank T.

In this regard, the second check valve 320 is installed in the discharging flow passage 230, and the bypass flow passage 240 is closed by the discharge valve 600, so that the charged fuel is prevented from being transferred to the storage tank T through the discharging flow passage 230 or the bypass flow passage 240.

In one example, when the charging is completed, the first check valve 310 is installed in the charging flow passage 220, and the discharging flow passage 230 and the bypass flow passage 240 are closed by the solenoid valve 400 and the discharge valve 600, such that the fuel charged in the storage tank T is prevented from flowing back through the charging flow passage 220 or from being transferred to the port HP through the discharging flow passage 230 and the bypass flow passage 240.

### [In supplying (discharging) fuel]

The fuel charged to the storage tank T is supplied to a fuel consumption element such as the stack (not shown) through the port HP when starting and driving the vehicle.

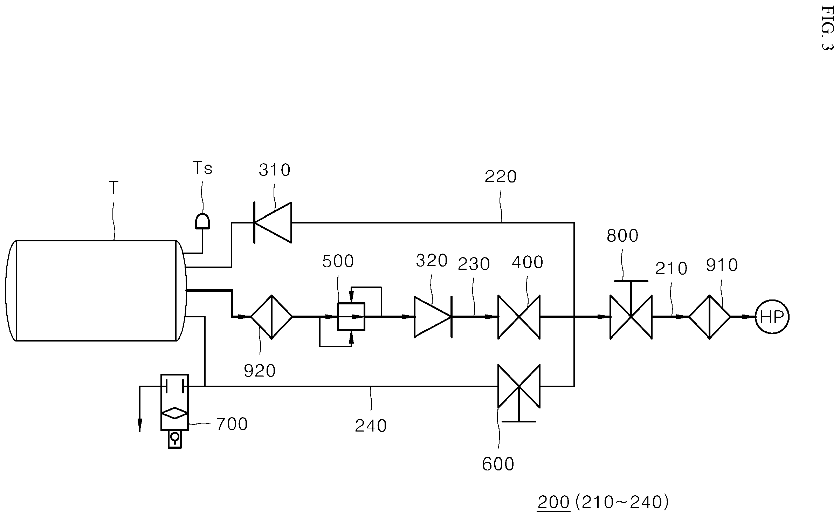

As shown in FIG. 3, the fuel transferred along the discharging flow passage 230 passes through the filter 920 to remove the foreign substances such as moisture therefrom. Then, the flow rate and the pressure thereof are adjusted through the metering valve 500 and the solenoid valve 400, respectively, and then the fuel is transferred to the charging/discharging flow passage 210. Then, the foreign substances such as moisture are removed once more therefrom through the filter 910 and then the fuel is supplied to a fuel consumption element such as the stack (not shown) through the port HP.

In this regard, the first check valve 310 is installed in the charging flow passage 220, and the bypass flow passage 240 is closed by the discharge valve 600, so that the discharged fuel is prevented from being transferred to the port HP through the charging flow passage 220 or the bypass flow passage 240.

### [In collecting fuel]

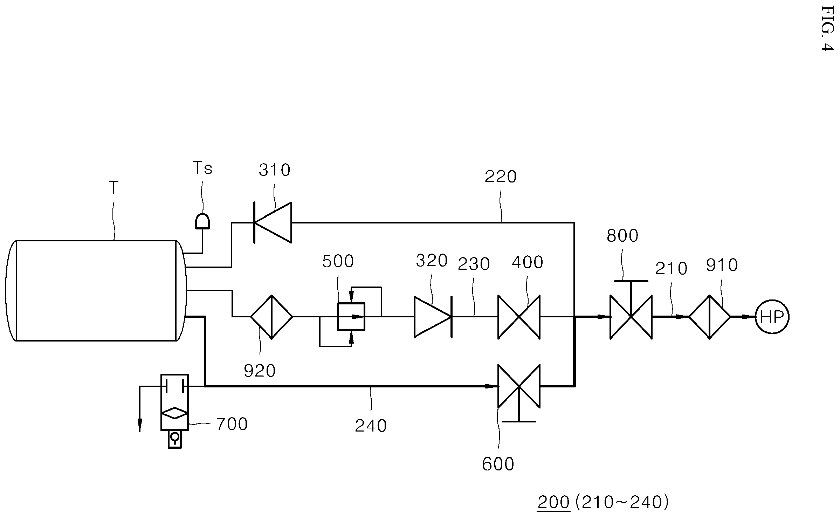

When the abnormality occurs in the valve assembly for controlling charging and discharging of a fuel and the system including the same, the bypass flow passage 240 is opened using the discharge valve 600 as shown in FIG. 4 such that the fuel in the storage tank T and the transfer flow passage 200 may be collected.

Although the embodiments of the present invention have been described in more detail with reference to the accompanying drawings, the present invention is not necessarily limited to these embodiments, and may be modified in a various manner within the scope of the claims.

## Claims

1. A valve assembly for controlling charging and discharging of a fuel, the valve assembly comprising:
a transfer flow passage (200) composed of:
a charging/discharging flow passage (210) through which the fuel is transferred during charging/discharging of the fuel;
a charging flow passage (220) branched from the charging/discharging flow passage and connected to a storage tank (T), wherein the fuel is transferred through the charging flow passage (220) during charging of the fuel; and
a discharging flow passage (230) branched from the charging/discharging flow passage (210) and connected to the storage tank (T), wherein the fuel is transferred through the discharging flow passage (230) during discharging of the fuel;
a first check valve (310) configured to prevent backflow of the fuel transferred along the charging flow passage (220);
a solenoid valve (400) configured to open or close the discharging flow passage (230) to regulate flow of the fuel;
a second check valve (320) configured to prevent backflow of the fuel transferred along the discharging flow passage (230); and
a metering valve (500) configured to control a flow rate of the fuel transferred along the discharging flow passage (230);
**characterized in that** the second check valve (320) is positioned between the metering valve (500) and the solenoid valve (400).

2. The valve assembly of claim 1, further comprising a manual valve (800) configured to open or close the charging/discharging flow passage (210) to control flow of the fuel during charging/discharging of the fuel.

3. The valve assembly of claim 2, wherein the transfer flow passage (200) further includes a bypass flow passage (240) branched from the charging/discharging flow passage (210) and connected to the storage tank (T),
wherein a discharge valve (600) is installed in the bypass flow passage (240) and is configured to collect the fuel charged to the storage tank (T).

4. The valve assembly of claim 3, further comprising a temperature-sensitive safety device (700) configured to operate according to a surrounding temperature around the valve assembly and to discharge the fuel charged into the storage tank (T) to an outside.

5. The valve assembly of claim 4, further comprising a filter (910) configured to remove a foreign substance contained in the fuel transferred along the charging/discharging flow passage (210).

6. The valve assembly of claim 4, further comprising a further filter configured to remove a foreign substance contained in the fuel transferred along the discharging flow passage (230).

7. The valve assembly of claim 4, further comprising a temperature sensor (TS) for measuring a temperature of the fuel charged in the storage tank (T).

## Patentansprüche

1. Ventilanordnung zum Steuern eines Einfüllens und Ablassens eines Kraftstoffs, wobei die Ventilanordnung umfasst:
einen Übertragungsströmungsdurchgang (200), bestehend aus:
einem Einfüll-/Ablassströmungsdurchgang (210), durch den der Kraftstoff während eines Einfüllens/Ablassens des Kraftstoffs übertragen wird;
einem Einfüllströmungsdurchgang (220), der von dem Einfüll-/Ablassströmungsdurchgang abzweigt und mit einem Speichertank (T) verbunden ist, wobei der Kraftstoff während eines Einfüllens des Kraftstoffs durch den Einfüllströmungsdurchgang (220) übertragen wird; und
einem Ablassströmungsdurchgang (230), der von dem Einfüll-/Ablassströmungsdurchgang (210) abzweigt und mit dem Speichertank (T) verbunden ist, wobei der Kraftstoff während eines Ablassens des Kraftstoffs durch den Ablassströmungsdurchgang (230) übertragen wird;
ein erstes Rückschlagventil (310), das eingerichtet ist, um eine Rückströmung des Kraftstoffs zu verhindern, der entlang des Einfüllströmungsdurchgangs (220) übertragen wird;
ein Solenoidventil (400), das eingerichtet ist, um den Ablassströmungsdurchgang (230) zu öffnen oder zu schließen, um eine Strömung des Kraftstoffs zu regulieren;
ein zweites Rückschlagventil (320), das eingerichtet ist, um eine Rückströmung des Kraftstoffs zu verhindern, der entlang des Ablassströmungsdurchgangs (230) übertragen wird; und
ein Dosierventil (500), das eingerichtet ist, um eine Strömungsrate des Kraftstoffs zu steuern, der entlang des Ablassströmungsdurchgangs (230) übertragen wird;
**dadurch gekennzeichnet, dass** das zweite Rückschlagventil (320) zwischen dem Dosierventil (500) und dem Solenoidventil (400) positioniert ist.

2. Ventilanordnung nach Anspruch 1, ferner umfassend ein manuelles Ventil (800), das eingerichtet ist, um den Einfüll-/Ablassströmungsdurchgang (210) zu öffnen oder zu schließen, um eine Strömung des Kraftstoffs während des Einfüllens/Ablassens des Kraftstoffs zu steuern.

3. Ventilanordnung nach Anspruch 2, wobei der Übertragungsströmungsdurchgang (200) ferner einen Umgehungsströmungsdurchgang (240) aufweist, der von dem Einfüll-/Ablassströmungsdurchgang (210) abzweigt und mit dem Speichertank (T) verbunden ist,
wobei ein Ablassventil (600) in dem Umgehungsströmungsduchgang (240) installiert und eingerichtet ist, um den Kraftstoff zu sammeln, der in den Speichertank (T) eingefüllt wird.

4. Ventilanordnung nach Anspruch 3, ferner umfassend eine temperaturempfindliche Sicherheitsvorrichtung (700), die eingerichtet ist, um entsprechend einer Umgebungstemperatur um die Ventilanordnung herum zu arbeiten und den Kraftstoff, der in den Speichertank (T) eingefüllt ist, nach außen abzulassen.

5. Ventilanordnung nach Anspruch 4, ferner umfassend einen Filter (910), der eingerichtet ist, um einen Fremdstoff zu entfernen, der in dem Kraftstoff enthalten ist, der entlang des Einfüll-/Ablassströmungsdurchgangs (210) übertragen wird.

6. Ventilanordnung nach Anspruch 4, ferner umfassend einen Filter, der eingerichtet ist, um einen Fremdstoff zu entfernen, der in dem Kraftstoff enthalten ist, der entlang des Ablassströmungsdurchgangs (230) übertragen wird.

7. Ventilanordnung nach Anspruch 4, ferner umfassend einen Temperatursensor (TS) zum Messen einer Temperatur des Kraftstoffs, der in den Tank (T) eingefüllt wurde.

## Revendications

1. Ensemble de soupape permettant de commander la charge et la décharge d'un carburant, l'ensemble de soupape comprenant :
un passage d'écoulement de transfert (200) constitué de :
un passage d'écoulement de charge/décharge (210) à travers lequel le carburant est transféré pendant la charge/décharge du carburant ;
un passage d'écoulement de charge (220) bifurquant à partir du passage d'écoulement de charge/décharge et raccordé à un réservoir de stockage (T), dans lequel le carburant est transféré à travers le passage d'écoulement de charge (220) pendant la charge du carburant ; et
un passage d'écoulement de décharge (230) bifurquant à partir du passage d'écoulement de charge/décharge (210) et raccordé au réservoir de stockage (T), dans lequel le carburant est transféré à travers le passage d'écoulement de décharge (230) pendant la décharge du carburant ;
une première soupape de retenue (310) configurée pour empêcher un refoulement du carburant transféré le long du passage d'écoulement de charge (220) ;
une soupape électromagnétique (400) configurée pour ouvrir ou fermer le passage d'écoulement de décharge (230) afin de réguler l'écoulement du carburant ;
une deuxième soupape de retenue (320) configurée pour empêcher un refoulement du carburant transféré le long du passage d'écoulement de décharge (230) ; et
une soupape de dosage (500) configurée pour commander un débit du carburant transféré le long du passage d'écoulement de décharge (230) ;
**caractérisé en ce que** la deuxième soupape de retenue (320) est positionnée entre la soupape de dosage (500) et la soupape électromagnétique (400).

2. Ensemble de soupape selon la revendication 1, comprenant en outre une soupape manuelle (800) configurée pour ouvrir ou fermer le passage d'écoulement de charge/décharge (210) afin de commander l'écoulement du carburant pendant la charge/décharge du carburant.

3. Ensemble de soupape selon la revendication 2, dans lequel le passage d'écoulement de transfert (200) inclut en outre un passage d'écoulement de dérivation (240) bifurquant à partir du passage d'écoulement de charge/décharge (210) et raccordé au réservoir de stockage (T),
dans lequel une soupape de décharge (600) est installée dans le passage d'écoulement de dérivation (240) et configurée pour collecter le carburant chargé vers le réservoir de stockage (T).

4. Ensemble de soupape selon la revendication 3, comprenant en outre un dispositif de sécurité sensible à la température (700) configuré pour fonctionner selon une température ambiante autour de l'ensemble de soupape et pour décharger le carburant chargé dans le réservoir de stockage (T) vers un extérieur.

5. Ensemble de soupape selon la revendication 4, comprenant en outre un filtre (910) configuré pour éliminer des substances étrangères contenues dans le carburant transféré le long du passage d'écoulement de charge/décharge (210).

6. Ensemble de soupape selon la revendication 4, comprenant en outre un autre filtre configuré pour éliminer des substances étrangères contenues dans le carburant transféré le long du passage d'écoulement de décharge (230).

7. Ensemble de soupape selon la revendication 4, comprenant en outre un capteur de température (TS) permettant de mesurer une température du carburant chargé dans le réservoir de stockage (T).
